# EUROPÄISCHE PATENTSCHRIFT

(11) **EP 3 182 084 B1**
(45) Veröffentlichungstag und Bekanntmachung des Hinweises auf die Patenterteilung: **21.02.2018**
(21) Anmeldenummer: 15200823.1
(22) Anmeldetag: 17.12.2015
(51) Int. Cl.: G01L 9/00, G01N 29/02, G01N 29/24, G01K 11/26, H04Q 9/14

(54) **VERFAHREN ZUR ABFRAGE VON MESSWERTEN EINER SICH ZEITLICH VERÄNDERNDEN MESSGRÖSSE VON EINEM SAW-SENSOR**
METHOD FOR INQUIRING MEASUREMENT VALUES FOR A VARIABLE WHICH CHANGES OVER TIME FROM A SAW SENSOR
PROCÉDÉ D'INTERROGATION DE VALEURS MESURÉES D'UNE GRANDEUR DE MESURE SE MODIFIANT DANS LE TEMPS D'UN CAPTEUR SAW

(43) Veröffentlichungstag der Anmeldung: 21.06.2017
(73) Patentinhaber: pro.micron GmbH & Co.KG, 87600 Kaufbeuren (DE)
(72) Erfinder: WIEDBRAUK, André, 86899 Landsberg (DE)
(74) Vertreter: Raffay & Fleck

(56) Entgegenhaltungen:
- EP-A2- 1 708 540
- US-B1- 8 240 911
- POHL A: "A review of wireless SAW sensors", IEEE TRANSACTIONS ON ULTRASONICS, FERROELECTRICS AND FREQUENCY CONTROL, IEEE, US, Bd. 47, Nr. 2, 1. März 2000 (2000-03-01), Seiten 317-332, XP011448529, ISSN: 0885-3010, DOI: 10.1109/58.827416

## Beschreibung

Die Erfindung betrifft ein Verfahren zur, insbesondere drahtlosen, Abfrage von mittels eines nach dem Prinzip der Verzögerungsleitung arbeitenden SAW-Sensors aufgenommenen Messwerten einer sich zeitlich verändernden Messgröße von dem SAW-Sensor mit den Merkmalen des Oberbegriffs des Anspruchs 1.

Es ist allgemein bekannt, dass Sensoren, die nach dem Prinzip der akustischen Oberflächenwellen arbeiten, so genannte SAW-Sensoren, für die Bestimmung von Messwerten unterschiedlicher Messgrößen eingesetzt werden können. Sie kommen insbesondere für Temperaturmessungen, Druckmessungen, Messungen anliegender Kräfte und Momente sowie Bestimmungen mechanischer Spannungen zum Einsatz, können aber auch Messwerte zu anderen Messgrößen ermitteln bzw. zu deren Bestimmung eingesetzt werden. Der Vorteil derartiger SAW-Sensoren besteht darin, dass diese vergleichsweise robust sind, insbesondere gegenüber hohen Temperaturen, dass sie zudem klein dimensioniert werden können und dass sie eine drahtlose Fernabfrage ermöglichen, insoweit auch in Systemen angewendet werden können, in denen eine unmittelbare Kontaktierung der Messsensoren nur schwer oder überhaupt nicht möglich ist.

SAW-Sensoren werden dabei häufig auch in solchen Umgebungen eingesetzt, in denen die Messgrößen, zu denen die Messwerte erfasst werden sollen, dynamischen Änderungen unterliegen. Beispielsweise werden SAW-Sensoren genutzt, um den Temperaturgang von Öfen für die Lebensmittelverarbeitung zu überwachen, um ein Temperaturprofil von Lötöfen aufzunehmen, um dynamische Druckveränderungen aufzuzeichnen und dergleichen.

Bei den SAW-Sensoren gibt es zwei grundsätzlich unterschiedliche Funktionsprinzipien der Sensoren an sich und auch der dadurch begründeten Abfrageverfahren für die drahtlose Abfrage der Messdaten bzw. Messwerte. Beim ersten Prinzip werden bei so genannten SAW-Resonatoren die Strukturen auf den SAW-Sensoren derart gebildet, dass durch eine Veränderung der Messgröße eintretende Änderungen einerseits der Geometrie der Strukturen, andererseits der Materialeigenschaften des in dem SAW-Sensor verwendeten oberflächenwellenaktiven Materials eine Veränderung der Resonanzfrequenz eines durch die Strukturen auf dem SAW-Sensor gebildete Resonators bewirken. Hier wird also der Messwert durch eine festgestellte Resonanzfrequenz und die entsprechende Frequenzantwort des SAW-Sensors auf ein Abfragesignal bzw. einen Abfragepuls hin ermittelt. Ein mit einem nach dem vorstehend beschriebenen Prinzip der abhängig von der Messgröße veränderlichen Resonanzfrequenz arbeitenden SAW-Sensor bestückter Temperaturmessfühler und ein mit diesem arbeitendes Verfahren sind in der EP 1 708 540 A2 beschrieben.

Bei einem zweiten Prinzip wird eine durch den Einfluss der Messgröße hervorgerufene Veränderung der Laufzeit der akustischen Oberflächenwellen auf dem SAW-Sensor und zwischen dort aufgebrachten Strukturen, insbesondere einem elektroakustischen Wandler und einem Reflektor, ausgenutzt. Hier wird ein durch einen hochfrequenten Abfragepuls ausgelöstes Antwortsignal des SAW-Sensors hinsichtlich der entstandenen zeitlichen Verzögerung analysiert und wird diese Verzögerung, die auch als Delay bezeichnet wird, zur Bestimmung des Messwertes ausgewertet. Diese SAW-Sensoren werden auch als "Delay-Line-SAW" oder "Delay-Line-Sensoren" bezeichnet. In der Praxis wird für die Ermittlung eines Messwertes bei den Delay-Line SAW nicht nur eine einzige Abfrage mit einem einzigen Abfragepuls auf einer festen Abfragefrequenz durchgeführt, sondern es werden in einer Serie nacheinander mehrere Abfragepulse an den SAW-Sensor gegeben, die jeweils Hochfrequenzsignale mit unterschiedlichen Frequenzen sind. Die zugehörigen Antwortsignale des SAW-Sensors werden dann ausgewertet hinsichtlich der ermittelten zeitlichen Verzögerung und aus den einzelnen Werten wird durch Mittelwertbildung die gemittelte Verzögerung erhalten, aus der dann der Messwert bestimmt wird. Üblicherweise werden hierbei Serien von Abfragepulsen eingesetzt, deren Frequenzlauf von einer Ausgangsfrequenz bis zu einer Endfrequenz monoton verläuft, also klassisch monoton ansteigend oder auch monoton abfallend. Aus der US 8,240,911 B1 ist ein drahtloser passiver Temperatursensor bekannt, der ein nach dem vorstehend erläuterten Prinzip der Laufzeitverzögerung arbeitendes Oberflächenwellensensorelement enthält.

Hierbei hat sich nun herausgestellt, dass immer dann, wenn die beobachtete Messgröße, zum Beispiel eine Temperatur, aus einer Phase, in der diese konstant war, in eine Phase mit dynamischer Veränderung, zum Beispiel einem linearen Anstieg, übergeht, der so bestimmte und von dem SAW-Sensor ausgelesene Messwert springt. D.h. in einem Übergang von der linearen Phase der Messgröße in die Phase der dynamischen Veränderung, zum Beispiel eines Anstieges oder Abfalls, ergibt sich plötzlich ein als Messartefakt zu charakterisierender Versatz des Messwertes für die Messgröße. Gleiches gilt bei einem Übergang von einer Phase einer dynamischen Veränderung der Messgröße zu einer Phase mit konstantem Messwert, wo wiederum ein Sprung des Messwertes zu verzeichnen ist.

Eine weitere Beschreibung des technischen Hintergrunds von drahtlos arbeitenden SAW-Sensoren ist in der Veröffentlichung "A Review of Wireless SAW-Sensors" von Alfred Pohl in IEEE Transactions on Ultrasonics, Ferroelectrics, and Frequency Control, Band 47, Nr. 2 aus März 2000, S. 317-332 zu finden.

Dem vorstehend geschilderten Problem zu begegnen und die durch die Sprünge repräsentierten Messfehler auszumerzen, ist Aufgabe der Erfindung. Entsprechend soll ein Verfahren der eingangs genannten Art dahingehend verbessert werden, dass diese Messartefakte und Sprünge der Messwerte verhindert werden können.

Eingehende Analysen dieses Phänomens haben gezeigt, dass dieser Effekt vor allem auf die gemessene scheinbare Laufzeit der akustischen Oberflächenwellen auf dem SAW-Sensor zurückzuführen ist. So ist zum Beispiel bei einer Serie von Abfragepulsen, die eine mit der Zeit ansteigende Abfragefrequenz aufweisen und bei einem gleichzeitigen Anstieg der Messgröße, zum Beispiel steigender Temperatur, eine Dehnung der gemessenen Zeit zu verzeichnen. Dies beruht auf einem Effekt, der analog zum Dopplereffekt in der Akustik oder Optik zu sehen ist.

Weitergehende Untersuchungen haben gezeigt, dass das Vorzeichen der sprunghaften Änderung, also ein plötzlicher Anstieg bzw. eine plötzliche Verringerung des Messwertes, von zwei Faktoren bestimmt wird, nämlich einerseits dem Vorzeichen der zeitlichen Änderung der Messgröße selbst (Anstieg bzw. Abfall) und andererseits der Art der Monotonie der Serie der Abfragepulse, also ob die Abfragefrequenzen mit der Zeit steigend oder fallend veränderlich sind. Hier setzt die Erfindung mit der Lösungsidee an, eine Monotonie der Frequenzen der Abfragepulse in der Serie solcher Abfragepulse in einer solchen Weise geschickt auszunutzen, dass im Ergebnis ein einen Versatz ausschließender Mittelwert um den realen Messwert erhalten wird. Konkret geschieht dies mit dem Verfahren, wie dies in Anspruch 1 bezeichnet ist. Vorteilhafte Weiterbildungen dieses Verfahrens sind in den Ansprüchen 2 bis 8 bezeichnet.

Das Verfahren zur, insbesondere drahtlosen, Abfrage von mittels eines nach dem Prinzip der Verzögerungsleitung arbeitenden SAW-Sensors aufgenommenen Messwerten einer sich zeitlich verändernden Messgröße von dem SAW-Sensor arbeitet zunächst einmal wie auch im Stand der Technik üblich mit einer Serie von zeitlich nacheinander abgesendeten Abfragepulsen in Form von Hochfrequenzsignalen, die zum Abfragen eines Messwertes an den SAW-Sensor gesendet werden. Auch bei dem erfindungsgemäßen Verfahren wird, wie im Stand der Technik üblich, für die Abfragepulse der Serie jeweils eine zu der Frequenz der anderen Abfragepulse der Serie verschiedene Frequenz für jeden der Abfragepulse verwendet. Die von dem SAW-Sensor empfangenen Antwortsignale zu den jeweiligen Abfragepulsen werden hinsichtlich einer durch die Laufzeit einer durch den jeweiligen Abfragepuls auf dem SAW-Sensor induzierten akustischen Oberflächenwelle erhaltenen Laufzeitverzögerung ausgewertet, wobei aus den erhaltenen Laufzeitverzögerungen durch eine Mittelwertbildung der Messwert erhalten wird.

Das Neue und Besondere an dem erfindungsgemäßen Verfahren ist nun dadurch gegeben, dass abweichend von Stand der Technik, wo die Serie von Abfragepulsen regelmäßig einer gleichbleibenden Monotonie folgte, diese Serie zwei Halbserien von jeweils zeitlich nacheinander abgegebenen Abfragepulsen enthält. Dabei weist bei einer ersten der beiden Halbserien ein zeitlich nachgelagerter Abfragepuls dieser ersten Halbserie eine jeweils gegenüber der Frequenz eines zeitlich vorgehenden Abfragepulses der ersten Halbserie erhöhte Frequenz auf. Mit anderen Worten ist der Frequenzverlauf der Frequenzen der Abfragepulse in dieser ersten Halbserie monoton ansteigend. In der zweiten der beiden Halbserien weist hingegen ein zeitlich nachgelagerter Abfragepuls der zweiten Halbserie eine jeweils gegenüber der Frequenz eines zeitlich vorhergehenden Abfragepulses der zweiten Halbserie verringerte Frequenz auf. In dieser zweiten Halbserie ist der Frequenzverlauf der Abfragepulse mithin monoton fallend.

Durch eine so konstruierte Serie von Abfragepulsen wird durch den Wechsel der Monotonie der Frequenzabfolgen in den beiden Halbserien eine Umkehr des Vorzeichens des Versatz erreicht, so dass sich bei der nachfolgenden Mittelwertbildung dieser Versatz herausmittelt, nur noch der tatsächliche Messwert, bzw. ein dem tatsächlichen Messwert besonders nahe gelegener Wert erhalten wird.

Die Erfinder haben nämlich erkannt, dass das Sensorbauteil sich unter dynamischen Änderungen der Messgröße quasi-dispersiv verhält. Dispersiv heißt, dass Phasen- bzw. Gruppenlaufzeiten der Signale nicht mehr frequenzunabhängig konstant sind, sondern vielmehr eine Frequenzabhängigkeit zeigen, wobei ein mathematischer Term, der diese Abhängigkeit abhängig von der Monotonie der Frequenzrampe (monoton steigend oder monoton fallend) sein Vorzeichen ändert. Wichtig ist dabei, dass es sich bei dem erkannten dispersiven Verhalten um kein reales, durch das Design des Sensors hervorgerufenes Verhalten handelt. Der Sensor selbst ist nämlich so entworfen und konzipiert, dass bei konstantem Messwert der Messgröße, insbesondere bei konstanter zu messender Temperatur, gerade keine Dispersion auftritt. Insoweit wird hier von einem quasidispersiven Verhalten gesprochen.

Grundsätzlich kann hierbei so vorgegangen werden, dass zunächst die Abfragepulse einer ersten der beiden Halbserien gesendet werden, danach dann erst die Abfragepulse der zweiten der Halbserien. Dabei ist es dann egal, ob zur Bildung der Serie der Abfragepulse zunächst eine im Frequenzlauf monoton ansteigende Halbserie und dann eine im Frequenzlauf monoton abfallende Halbserie oder zunächst die im Frequenzlauf monoton abfallende und danach die im Frequenzlauf monoton ansteigende Halbserie gelegt wird. In den aktuellen Versuchen hat die Anmelderin in der Regel solche Serien von Abfragepulse eingesetzt, in der zunächst eine Halbserie mit monoton ansteigendem Frequenzlauf und im Anschluss daran eine Halbserie mit monoton abfallendem Frequenzlauf lag.

Genauso gut ist es aber auch möglich die Abfragepulse der beiden Halbserien ineinander verschachtelt zu senden. Ineinander verschachtelt heißt dabei, dass nicht die beiden Halbserien streng nacheinander abgearbeitet werden, sondern dass vielmehr zunächst ein oder mehrere Abfragepulse einer ersten der beiden Halbserien, dann ein oder mehrere Abfragepulse der zweiten der beiden Halbserien, anschließend wieder ein oder mehrere Abfragepulse der ersten der beiden Halbserien gesendet werden usw. Grundsätzlich kann diese Verschachtelung nach einem vorgegebenen Muster, sie kann aber auch zufällig erfolgen, z.B. in dem die Reihenfolge der zu sendenden Abfragepulse nach der Zuordnung zu den Halbserien mit einem Zufallsgenerator bestimmt wird (selbstverständlich bleiben dabei die einzelnen Abfragepulse der jeweiligen Halbserien in ihrer zeitlichen Abfolge hinsichtlich der Frequenzänderung monoton). Wichtig ist bei einer verschachtelten Vorgehensweise nur, dass die gesendeten Abfragepulse und erhaltenen Antworten den jeweiligen Halbserien genau zugeordnet werden und diese Zuordnung auch in der weiteren Verarbeitung, insbesondere der Mittelwertbildung erhalten bleibt.

Das Mittelungsverfahren wird dann besonders genau und erlaubt ein sehr zuverlässiges Herausmitteln des auf dem oben beschriebenen Effekt beruhenden Versatzes oder Sprunges des Messwertes, wenn die Frequenzlagen der Abfragepulse in beiden Halbserien symmetrisch zueinander gewählt sind. Symmetrisch zueinander bedeutet in diesem Falle zunächst, dass in jeder der Halbserien gleich viele Abfragepulse liegen. So wird bei der Mittelwertbildung eine gleiche Anzahl von mit positivem Vorzeichen hinzu addiertem Versatz des Messwertes erhaltenen Werten wie die Anzahl von mit negativem Vorzeichen subtrahiertem Versatz des Messwertes erhaltenen Werten berücksichtigt. Symmetrisch bedeutet hier aber auch, dass die Frequenzen zueinander jeweils paarweise gleich gewählt sind in jeder der Halbserien. So ist die niedrigste Frequenz in der ersten Halbserie auch als niedrigste Frequenz in der zweiten Halbserie enthalten, die höchste Frequenz in der ersten Halbserie ist als höchste Frequenz in der zweiten Halbserie enthalten und auch die dazwischenliegenden Frequenzen haben jeweils eine entsprechend gleiche Frequenz in der jeweils anderen Halbserie. Auch dies ergibt eine besonders gute Mittelwertbildung, bei der der Versatz bzw. Sprung besonders effektiv herausgemittelt wird.

Besonders bevorzugt werden in den beiden Halbserien lineare Verläufe der Frequenzen der Abfragepulse über der Zeitachse eingestellt. Auch diese Maßnahme führte zu besonders guten Mittelwertbildungen mit einer besonders effektiven Unterdrückung des oben beschriebenen Effektes und des sonst beobachteten Sprungs des Messwertes bei Änderungen des dynamischen Verlaufs der Messgröße.

Die Bestimmung des Messwertes kann dabei grundsätzlich auf unterschiedliche Weise erfolgen. So ist es einerseits möglich, zunächst aus den erhaltenen Laufzeitverzögerungen für jedes der Antwortsignale auf die Abfragepulse einer Serie von Abfragepulsen die einzelnen Laufzeitverzögerungen einer Mittelwertbildung zu unterziehen und aus dem so gewonnenen Mittelwert dann den Messwert zu bestimmen. Andererseits kann aber auch zunächst aus jeder einzelnen der erhaltenen Laufzeitverzögerungen der Antwortsignale auf jeden der Abfragepulse einer Serie von Abfragepulsen ein Wert für den Messparameter ermittelt werden und die Mittelwertbildung erst mit diesen Werten erfolgen, um daraus den Messwert zu bestimmen. Die Mittelwertbildung ist dabei in beiden Fällen insbesondere eine gleitende Mittelwertbildung.

Für eine bestmögliche Genauigkeit der Messung ist eine kurze Zeitdauer der Messreihe zur Ermittlung eines Messwertes für einen Messpunkt der sich verändernden Messgröße von Vorteil. Insoweit wird man für die Umsetzung des erfindungsgemäßen Verfahrens bestrebt sein, die Zeiten zwischen den einzelnen Abfragen und/oder die Zeiten zwischen den Halbserien so kurz wie möglich zu halten, dabei aber Zeiten zu wählen, die dennoch zu einem soliden und validen Ergebnis führen. Analoges gilt für die Wahl der Anzahl der Frequenzpunkte für die Abfrageserie. Auch dort wird der Fachmann unter Abwägung von Anforderungen an die Funktion des erfindungsgemäßen Verfahrens und dessen erwünschtes Ergebnis auf der einen Seite und eine nicht zu lange Messphase für die Bestimmung eines Messpunktes der zeitlich sich verändernden Messgröße eine optimale Anzahl bestimmen.

Um für die Erfüllung von Vorgaben der US-amerikanischen Zulassungsbehörde FCC (entsprechend den Vorschriften des *Code of Federal Regulations, Title 47, Chapter I, Subchapter A, Part 15, Subpart C,* § *15.247*) möglich zu machen, die eine zufällig erscheinende Frequenzfolge bei Abfragen verlangen, kann vorgesehen sein, einen Anteil der Abfragepulse aus einer der Halbserien, z.B. derjenigen mit über die Rampe abnehmender Frequenz, auszunehmen, z.B. 10% der Pulse, so dass die Symmetrie der Pulsfolgen in der ersten und der zweiten Halbserie durchbrochen ist. Dadurch stellt sich dann in dem Spektrum der Abfragepulse eine Schwebung ein, die ein Anzeichen für die nach FCC geforderte zufällig erscheinende Frequenzfolge ist.

Das beschriebene Verfahren ergibt insbesondere bei linear verlaufenden Änderungen der Messgrößen sehr gute Ergebnisse, bei denen der oben beschriebene Sprung und das dadurch repräsentierte Messartefakt weitgehend eliminiert werden kann. Es kann aber auch bei anderen Formen von dynamischen Veränderungen der Messgröße angewendet werden, die von einer ideal linearen Veränderung abweichen und führt auch dort zu einer deutlichen Erhöhung der Messgenauigkeit.

Weitere Merkmale und Vorteile der Erfindung ergeben sich aus der nachfolgenden Beschreibung von Ausführungsmöglichkeiten anhand der beigefügten Figuren. Dabei zeigen:
- Fig. 1: eine Prinzipdarstellung zur Erläuterung des erfindungsgemäßen Vorgehens bei einer Sensorabfrage;
- Fig. 2: den Verlauf von mit einer Serie von Abfragepulsen mit linear ansteigender Frequenz aufgenommenen Werte für die ermittelte Verzögerung über die Zeit für ein im Labor von Raumtemperatur auf 200°C dynamisch erwärmtes SAW-Sensorbauteil;
- Fig. 3: den Verlauf von mit einer Serie von Abfragepulsen mit linear abfallender Frequenz aufgenommenen Werte für die ermittelte Verzögerung über die Zeit für ein im Labor von Raumtemperatur auf 200°C dynamisch erwärmtes SAW-Sensorbauteil;
- Fig. 4: den Verlauf von mit ineinander (alternierend) verschachtelten Halbserien von Abfragepulsen mit in einer ersten Halbserie linear ansteigender und in einer zweiten Halbserie linear abfallender Frequenz aufgenommenen Werte für die ermittelte Verzögerung über die Zeit für ein im Labor von Raumtemperatur auf 200°C dynamisch erwärmtes SAW-Sensorbauteil;
- Fig. 5: einen gleitend gemittelten Signalverlauf, wie er aus dem Verlauf gemäß Fig. 4 erhalten wird;
- Fig. 6: einen Signalverlauf für die jeweils mit einer Serie von Abfragepulsen mit linear steigender Frequenz ermittelten Verzögerungswerte in einer realen Anwendung eines SAW-Sensors bei der Ermittlung eines Temperaturprofils in einem Lötofen; und
- Fig. 7: den Signalverlauf aus der Anwendung gemäß Fig. 6 mit einem gleitend gemittelten Signalverlauf und unter Verwendung von zwei Halbserien aus Abfragepulsen mit jeweils linear ansteigender bzw. linear abfallender Frequenz.

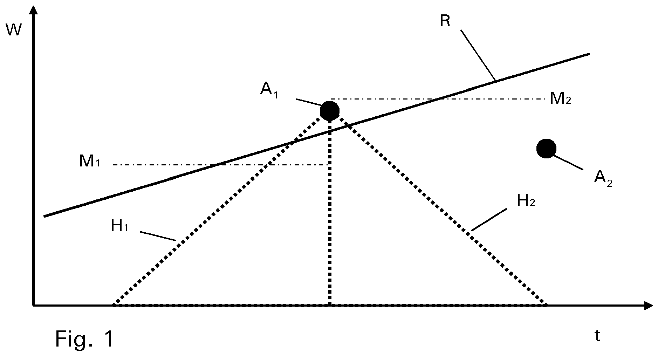

In Fig. 1 ist - in stark schematisierter Darstellung - das Grundprinzip der erfindungsgemäßen Vorgehensweise beim Abfragen von Sensordaten gezeigt.

Mit R ist eine - hier als Gerade dargestellte - Kurve eines sich mit der Zeit t (Rechtsachse) ändernden Wertes W (Hochachse) bezeichnet. Diese Kurve R soll den realen Verlauf des sich ändernden Wertes W bezeichnen. Dieser Wert kann z.B. eine Temperatur sein, aber auch ein anderer Wert.

Dieser Wert W wird nun mit einem SAW-Sensor, der insbesondere nach dem Verzögerungsleitungsprinzip (sog. Delay-Line) arbeitet, gemessen. Der von dem SAW-Sensor gemessene Wert W wird - in an sich bekannter Weise drahtlos (über Funktechnik) abgefragt, bei dem hier verwendeten Delay-Line-Sensor durch ermitteln einer zeitlichen Laufzeitverzögerung des Signals auf dem SAW-Sensor, welche zeitliche Verzögerung von der Größe abhängig ist, deren Wert W hier zu bestimmen ist.

Das Auslesen dieser Verzögerung und damit des Maßes für den Wert erfolgt hier nun mit aufeinander folgenden Abfragepulsen in zwei Halbserien, einer ersten Halbserie H₁, in der die Frequenz der aufeinander folgenden Abfragepulse monoton, hier insbesondere als linear dargestellt, ansteigt, und einer zweiten Halbserie H₂, in der die Frequenz der aufeinander folgenden Abfragepulse monoton, hier insbesondere als linear dargestellt, abfällt. Dabei erhält man, wenn man aus den Antwortsignalen der Abfragen der ersten Halbserie H₁ eine Mittelung vornimmt den ersten Mittelwert während der Messung M₁, der systematisch unterhalb des realen Wertes W auf der Kurve R liegt, wenn man aus den Antwortsignalen der Abfragen der zweiten Halbserie H₂ eine Mittelung vornimmt den zweiten Mittelwert während der Messung M₂, der systematisch unterhalb des realen Wertes W auf der Kurve R liegt. Mit A₁ und A₂ sind dann die durch Auswertung der ersten Halbserie H₁ bzw. der zweiten Halbserie H₂ erhaltenen Werte bezeichnet, die wiederum in zu den Abweichungen der Mittelwerte M₁ und M₂ korrespondierenden Weise von dem realen Wert abweichen. Diese Abweichungen, das haben die Erfinder festgestellt, sind bedingt durch das Vorzeichen der Steigung der Frequenzrampe in den jeweiligen Halbserien. Wenn man nun aber über beide Halbserien H₁ und H₂ mittelt, so heben sich diese Effekte auf, und man erhält eine den tatsächlichen Wert W auf der Kurve R repräsentierende Verzögerung.

Während in der Fig. 1 getrennte Halbserien H₁ und H₂ dargestellt sind, so erfolgt diese Darstellung allein aufgrund der besseren Veranschaulichung. Tatsächlich müssen die Halbserien H₁ und H₂ nicht getrennt und nacheinander "abgearbeitet" werden. Vielmehr kann auch eine ineinander verschachtelte Situation vorliegen, wo - insbesondere auch willkürlich bzw. zufallsgesteuert - alternierend Abfragepulse aus der ersten Halbserie H₁ und aus der zweiten Halbserie H₂ gesendet und die zugehörigen Antworten empfangen werden.

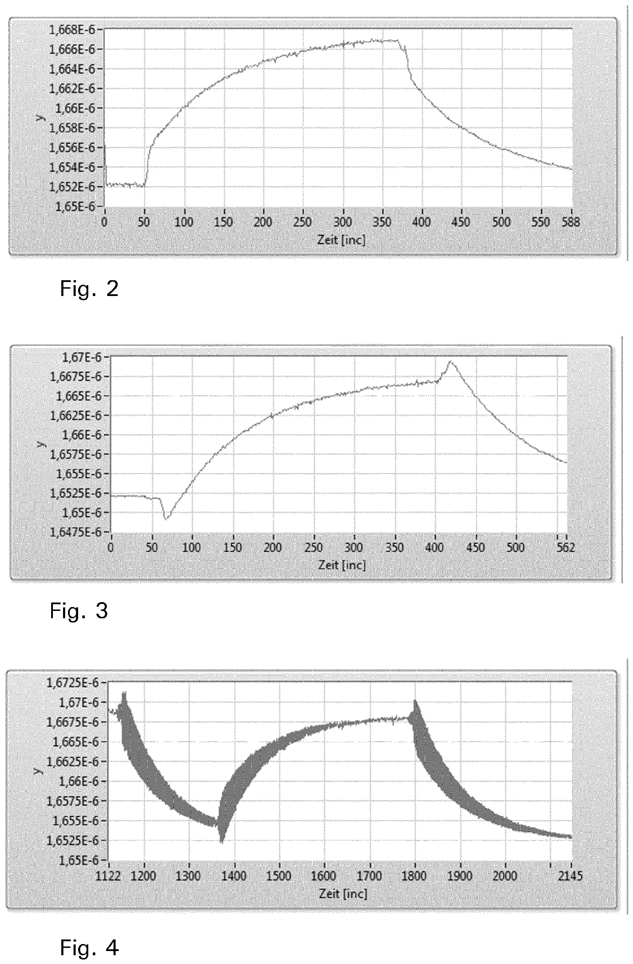

In den Figuren 2 bis 7 sind nun Messkurven von realen Versuchen und Messvorgängen dargestellt. Diese werden nachstehend näher erläutert.

Die Figur 2 zeigt als Ergebnis eines Laborversuchs aufgetragen über der Zeit (Rechtsachse) die aus den Antwortsignalen auf nacheinander folgende Abfragepulse einer Abfrageserie (für die Ermittlung des Ergebnisses an einem Messpunkt) und Mittelwertbildung erhaltenen gemittelten Werte für die auf einem abgefragten SAW-Bauteil (Delay-Line-Sensor) entstandene zeitliche Verzögerung. Das SAW-Bauteil wurde dabei in dem Zeitintervall zwischen dem Wert "50" auf der Rechtsachse und dem Wert "375" auf der Rechtsachse von Raumtemperatur auf ca. 200°C erhitzt. Für die in Fig. 2 dargestellte Messung wurden für die Ermittlung eines Messpunktes jeweils eine Reihe von Abfragen mit in zeitlich aufeinanderfolgender Reihe linear steigender Frequenz verwendet.

Figur 3 zeigt ein der Figur 2 vergleichbares Ergebnis eines analogen Laborversuchs, der in gleicher Weise und mit gleichen Bedingungen durchgeführt wurde wie der in Figur 2 dargestellte mit der einzigen Ausnahme, dass hier nun Abfragepulse mit einer linear fallenden Frequenzrampe zur Ermittlung des jeweiligen Wertes der gemittelten Verzögerung verwendet wurden. Der Vergleich zeigt deutlich den Unterschied in den Ergebnissen, der, wie die Erfinder erkannt haben, von dem Vorzeichen der monotonen Steigung der für die Abfragereihe pro Mittelwert verwendeten Frequenzrampe abhängen.

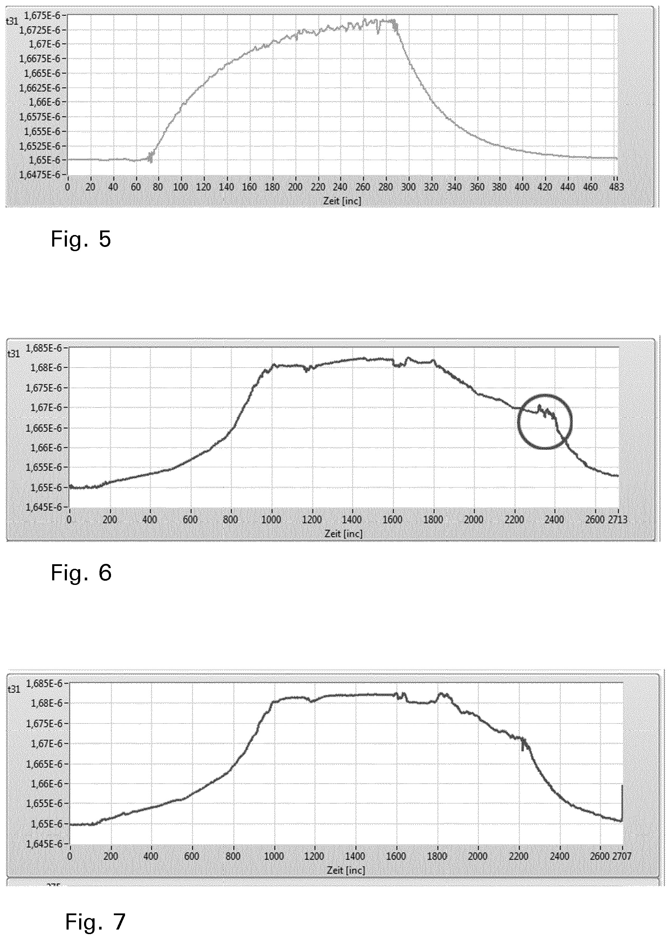

Figur 4 zeigte eine weitere Darstellung eines Ergebnisses einer Messung für den Versuchsaufbau entsprechend dem zu Figur 2 geschilderten. Hier ist nun für die Messung jedes Mittelwertes alternierend eine linear ansteigende und eine linear fallende Frequenzrampe (also eine solche Halbserie) zum Einsatz gekommen. Die hier verwendeten Halbserien (Frequenzrampen) waren zueinander spiegelbildlich bezogen auf die Frequenzachse (bzw. eine Linie parallel zu dieser Achse) der Darstellung der Frequenz in Abhängigkeit von der Zeit. Diese Vorgehensweise erlaubt nun ein Herauskürzen des mit den jeweiligen Monotonien der Frequenzserien (Frequenzrampen) verbundenen Fehler und ergibt so ein deutlich genaueres Ergebnis für die tatsächlich beobachtete Verzögerung auf dem SAW-Bauteil, aus der dann die anliegende Temperatur sehr exakt bestimmt werden kann. Dieser exakte Verlauf ist in Figur 5 gezeigt, wo das Ergebnis der Verzögerung basierend auf der Vorgehensweise zum Abfragen nach Figur 4 unter Einsatz einer gleitenden Mittelung dargestellt ist.

Figuren 6 und 7 zeigen nun entsprechende Signalverläufe aus einer realen Anwendung, hier für einen SAW-Delay-Line-Temperatursensor beim Durchfahren eines Lötofens. Auch hier ist auf der Rechtachse die Zeit, auf der Hochachse die nach Mittelwertbildung für eine Abfragepulsserie erhaltene Laufzeitverzögerung auf dem SAW-Bauteil aufgetragen.

Figur 6 zeigt das Ergebnis der ermittelten Verzögerungszeiten, wie sie mit einer Abfragetechnik nach dem Stand der Technik erhalten wird (hier Abfragen mit Abfragepulsen veränderlicher Frequenzen entlang einer linear steigenden Frequenzabfolge (Serie). Deutlich erkennbar ist eine "Störung", ein Artefakt, in der Kurve in dem durch den Kreis hervorgehobenen Abschnitt. Diese Störung ist in der Auswertung gemäß Figur 7, in der die Ergebnisse einer Abfragetechnik, bei der in erfindungsgemäßer Weise mit zwei Halbserien mit einmal ansteigender und einmal abfallender Frequenz und mit gleitender Mittelung der Ergebnisse gearbeitet worden ist, nicht mehr zu erkennen. Die aus den so ermittelten Verzögerungen erhaltenen Temperaturkurven (Temperaturprofile) entsprechen, was Kontrolluntersuchungen zeigen konnten, weitaus besser den realen Verhältnissen als die Werte, die aus der mit einer nach dem Stand der Technik arbeitenden Abfragemethode, wie sie in Figur 6 veranschaulicht ist, erhalten worden sind, gewonnene Temperaturwerte und -kurven.

### Bezugszeichenliste

- H₁: erste Halbserie
- H₂: zweite Halbserie
- M₁: erster Mittelwert während der Messung
- M₂: zweiter Mittelwert während der Messung
- R: reale Kurve
- t: Zeit
- W: Messwert
- A₁: Durch Auswertung der ersten Halbserie erhaltener Wert
- A₂: Durch Auswertung der zweiten Halbserie erhaltener Wert

## Patentansprüche

1. Verfahren zur Abfrage von mittels eines nach dem Prinzip der Verzögerungsleitung arbeitenden SAW-Sensors aufgenommenen Messwerten einer sich zeitlich verändernden Messgröße von dem SAW-Sensor, wobei zur Abfrage eines Messwertes eine Serie von zeitlich nacheinander abgesendeten Abfragepulsen in Form von Hochfrequenzsignalen an den SAW-Sensor gesendet werden, wobei die Abfragepulse der Serie jeweils zueinander verschiedene Frequenzen aufweisen und wobei die von dem SAW-Sensor empfangenen Antwortsignale zu den jeweiligen Abfragepulsen hinsichtlich einer durch die Laufzeit einer durch den jeweiligen Abfragepuls auf dem SAW-Sensor induzierten akustischen Oberflächenwelle erhaltenen Laufzeitverzögerung ausgewertet werden und wobei aus den erhaltenen Laufzeitverzögerungen durch eine Mittelwertbildung der Messwert erhalten wird,
**dadurch gekennzeichnet, dass**
die Serie von Abfragepulsen zwei Halbserien von jeweils zeitlich nacheinander abgegebenen Abfragepulsen enthält, wobei in einer ersten der beiden Halbserien ein zeitlich nachgelagerter Abfragepuls der ersten Halbserie eine jeweils gegenüber der Frequenz eines zeitlich vorhergehenden Abfragepulses der ersten Halbserie erhöhte Frequenz aufweist und wobei in einer zweiten der beiden Halbserien ein zeitlich nachgelagerter Abfragepuls der zweiten Halbserie eine jeweils gegenüber der Frequenz eines zeitlich vorhergehenden Abfragepulses der zweiten Halbserie verringerte Frequenz aufweist.

2. Verfahren nach Anspruch 1, **dadurch gekennzeichnet, dass** die Abfragepulse der Halbserien derart zeitlich getaktet sind, dass zunächst die Abfragepulse der einen der beiden Halbserien gesendet werden und im Anschluss daran die Abfragepulse der anderen der beiden Halbserien gesendet werden.

3. Verfahren nach Anspruch 2, **dadurch gekennzeichnet, dass** die Serie von Abfragepulsen in der zeitlichen Abfolge zuerst die erste Halbserie und danach die zweite Halbserie enthält.

4. Verfahren nach Anspruch 1, **dadurch gekennzeichnet, dass** Abfragepulse der ersten und der zweiten Halbserie ineinander verschachtelt gesendet werden.

5. Verfahren nach einem der vorhergehenden Ansprüche, **dadurch gekennzeichnet, dass** die Frequenzlagen der Abfragepulse in den beiden Halbserien symmetrisch zueinander gewählt sind.

6. Verfahren nach einem der vorhergehenden Ansprüche, **gekennzeichnet durch** lineare Verläufe der Frequenzen der Abfragepulse über der Zeitachse in jeder der beiden Halbserien.

7. Verfahren nach einem der vorhergehenden Ansprüche, **dadurch gekennzeichnet, dass** für die Bestimmung des Messwertes aus den erhaltenen Laufzeitverzögerungen für jedes der Antwortsignale auf die Abfragepulse einer Serie von Abfragepulsen die einzelnen Laufzeitverzögerungen gemittelt werden, aus dem so gewonnen Mittelwert dann der Messwert bestimmt wird.

8. Verfahren nach einem der Ansprüche 1 bis 4, **dadurch gekennzeichnet, dass** für die Bestimmung des Messwertes aus den erhaltenen Laufzeitverzögerungen für die Antwortsignale auf die Abfragepulse einer Serie von Abfragepulsen jeweils ein Wert für den Messparameter ermittelt und der Messwert durch Mittelwertbildung der so bestimmten Werte erhalten wird.

9. Verfahren nach einem der vorhergehenden Ansprüche, **dadurch gekennzeichnet, dass** die Abfrage der aufgenommenen Messwerte drahtlos erfolgt.

## Claims

1. A method for interrogating measurement values of a parameter changing over time, values taken by a SAW sensor operating according to the delay line principle, wherein a series of interrogation pulses, sent in succession in time are sent to the SAW sensor in the form of high-frequency signals in order to interrotage a measurement value, wherein the interrogation pulses of the series present different frequencies with respect to one another and wherein the reponse signals received from the SAW sensor, in response to the various interrogation pulses, are interpreted in terms of a delay maintained for the duration of an acoustic surface wave induced by the respective interrogation pulse onto the SAW sensor and wherein the measurement value is obtained from the time delays and then averaged,
**characterised in that**
the series of interrogation pulses containes two semi-series of interrogation pulses emitted in succession in time, wherein in a first of both semi-series a time-offset interrogation pulse of the first semi-series presents a higher frequency with respect to the frequency of an interrogtion pulse of the first semi-series, which was emitted previously in time and wherein in a second of both semi-series, an interrogation pulse of the second semi-series, emitted at a later stage, presents a reduced frequency with respect to the frequency of an interrogation pulse of the second semi-series, which was emitted previously in time.

2. The method according to claim 1, **characterised in that** the interrogation pulses of the semi-series are timed in such a way that the interrogation pulses of one of both semi-series are sent first and subsequently the interrogation pulses of the other of both semi-series are sent.

3. The method according to claim 2, **characterised in that** the series of interrogation pulses contains, in a chronological sequence, first the first semi-series and then the second semi-series.

4. The method according to claim 1, **characterised in that** interrogation pulses of the first semi-series and of the second semi-series are sent interlaced with one another.

5. A method according to any of the preceding claims, **characterised in that** the frequency positions of the interrogation pulses in both semi-series are selected to be symmetrical to one another.

6. The method according to any of the preceding claims, **characterised by** linear plots of the frequencies of the interrogation pulses over the chronological axis in each of both semi-series.

7. The method according to any of the preceding claims, **characterised in that**, in order to determine the measurement value from the time delays received for each of the response signals to the interrogation pulses of a series of interrogation pulses, the individual time delays are averaged, so that an averaged measurement value can be obtained.

8. The method according to one of the claims 1 to 4, **characterised in that**, in order to determine the measurement value from the time delays received for the response signals to the interrogation pulses of a series of interrogation pulses, a value is obtained systematically for the measurement parameter and the values so determined are averaged in order to obtain the measure value.

9. The method according to any of the preceding claims, **characterised in that** the measurement values recorded are interrogated in a wireless manner.

## Revendications

1. Procédé d'interrogation des valeurs de mesure d'un paramètre changeant dans le temps, valeurs prises par un capteur SAW fonctionnant selon le principe de ligne de temporisation, dans lequel une série d'impulsions d'interrogation, envoyées successivement dans le temps, sont envoyées au capteur SAW sous forme de signaux haute fréquence pour interroger une valeur de mesure, dans lequel les impulsions d'interrogation de la série présentent des fréquences différentes l'une par rapport à l'autre et les signaux de réponse reçus du capteur SAW, en réponse aux différentes impulsions d'interrogation, sont interprétés en termes de temporisation maintenue pendant la durée d'une onde acoustique induite par l'impulsion d'interrogation respective sur le capteur SAW et dans lequel la valeur de mesure est obtenue à partir des temporisations, puis moyennée,
**caractérisé en ce que**
la série d'impulsions d'interrogation contient deux demi-séries d'impulsions d'interrogation émises successivement dans le temps, dans lequel dans une première des deux semi-séries une impulsion d'interrogation décalée dans le temps de la première demi-série présente une fréquence plus élevée par rapport à la fréquence d'une impulsion d'interrogation de la première demi-série, qui a été émise précédemment dans le temps et dans lequel, dans une seconde des deux demi-séries, une impulsion d'interrogation de la deuxième demi-série, émise à un stade ultérieur, présente une fréquence réduite par rapport à la fréquence d'une impulsion d'interrogation de la deuxième demi-série, qui a été émise précédemment dans le temps.

2. Procédé selon la revendication 1, **caractérisé en ce que** les impulsions d'interrogation de la demi-série sont temporisées de telle manière que les impulsions d'interrogation de l'une des deux demi-séries sont envoyées en premier et ensuite les impulsions d'interrogation de l'autre des deux demi- demi-séries sont envoyées.

3. Procédé selon la revendication 2, **caractérisé en ce que** la série d'impulsions d'interrogation contient, dans une séquence chronologique, d'abord la première demi-série puis la seconde demi-série.

4. Procédé selon la revendication 1, **caractérisé en ce que** les impulsions d'interrogation de la première demi-série et de la seconde demi-série sont envoyées entrelacées les unes avec les autres.

5. Procédé selon l'une quelconque des revendications précédentes, **caractérisé en ce que** les positions de fréquence des impulsions d'interrogation dans les deux demi-séries sont choisies pour être symétriques l'une par rapport à l'autre.

6. Procédé selon l'une quelconque des revendications précédentes, **caractérisé par** des tracés linéaires des fréquences des impulsions d'interrogation sur l'axe chronologique dans chacune des deux demi-séries.

7. Procédé selon l'une quelconque des revendications précédentes, **caractérisé en ce que**, pour déterminer la valeur de mesure à partir des temporisations reçues pour chacun des signaux de réponse aux impulsions d'interrogation d'une série d'impulsions d'interrogation, les temporisations individuelles sont moyennées, de façon à obtenir une valeur de mesure moyennée.

8. Procédé selon l'une des revendications 1 à 4, **caractérisé en ce que**, pour déterminer la valeur de mesure à partir des temporisations reçues pour les signaux de réponse aux impulsions d'interrogation d'une série d'impulsions d'interrogation, on obtient systématiquement une valeur pour le paramètre de mesure et les valeurs ainsi déterminées sont moyennées afin d'obtenir la valeur de mesure.

9. Procédé selon l'une quelconque des revendications précédentes, **caractérisé en ce que** les valeurs de mesure enregistrées sont interrogées sans fil.
